# EUROPEAN PATENT APPLICATION

(11) **EP 4 495 816 A1**
(43) Date of publication of application: **22.01.2025**
(21) Application number: 24189546.5
(22) Date of filing: 18.07.2024
(51) Int. Cl.: G06F 21/55, G06F 21/56, G06F 21/57, G06F 21/60, H04L 9/40

(54) **PROTECTION FOR A COMPUTER SYSTEM THAT EXECUTES CONTAINERS**

(30) Priority: 20.07.2023 US 202318356184
(71) Applicant: VMware LLC, Palo Alto, CA 94304 (US)
(72) Inventor: Tsonov, Lachezar Lyudmilov, 1166 Sofia (BG); Amit, Gal, 4685209 Herzliya (IL); Shurany, Yonatan, 4685209 Herzliya (IL)
(74) Representative: Dilg, Haeusler, Schindelmann Patentanwaltsgesellschaft mbH

(57) **Abstract**

A method of protecting a computer system (100) from execution of container images that are not trustworthy, the method comprising: receiving a message from an application programming interface (API) server of a container orchestration system of the computer system (100), wherein the message indicates that a first container image has been requested for deployment; in response to receiving the message from the API server (142) that the first container image has been requested, transmitting a request to an image evaluation service (162) to evaluate whether the first container image is trustworthy for execution; and in response to receiving an indication from the image evaluation service (162) that the first container image is not trustworthy, transmitting to the API server (142), an instruction not to deploy containers using the first container image.

## Description

### Background

Applications are often deployed using containers. Containers are standalone units of software, each including one or more processes executing therein. Each container runs using a container image (also referred to herein simply as an "image"), which is a static archive that includes all the software packages used by the container's processes. Nodes in a computer system download images from a registry for deploying containers. If an image in the registry includes one or more malicious files, nodes throughout the computer system are vulnerable to deploying one or more containers with processes executing the malicious files. An image including a malicious file is referred to herein as a "malicious image."

A computer system that executes containers requires protection from malicious images. In some cases, the computer system itself controls which images are published at the registry. Specifically, one node in the computer system builds the images from various software packages before uploading (publishing) the images to the repository to be downloaded by nodes throughout the computer system. An attacker may infiltrate the build process and add malicious files to the image before the image is uploaded.

Additionally, in some cases, there is a third-party registry such as a Docker^{®} registry from which nodes of the computer system download images instead of (or in addition to) a registry controlled by the computer system. Images published at such third-party registries are also prone to including malicious files, which is outside the control of administrators of the computer system. Furthermore, there are various mechanisms for downloading malicious images to the computer system for execution. Because of the different vectors of attack, a comprehensive method for protecting a computer system from executing malicious images is needed.

### Summary

One or more embodiments provide a method of protecting a computer system from execution of container images that are not trustworthy. The method includes the steps of: receiving a message from an application programming interface (API) server of a container orchestration system of the computer system, wherein the message indicates that a first container image has been requested for deployment; in response to receiving the message from the API server that the first container image has been requested, transmitting a request to an image evaluation service to evaluate whether the first container image is trustworthy for execution; and in response to receiving an indication from the image evaluation service that the first container image is not trustworthy, transmitting to the API server, an instruction not to deploy containers using the first container image.

Further embodiments include a non-transitory computer-readable storage medium comprising instructions that cause a host computer to carry out the above method, as well as a host computer configured to carry out the above method.

### Brief Description of the Drawings

Figure 1 is a block diagram of a computer system in which embodiments may be implemented.
Figure 2 is a block diagram of a host computer and nodes of the computer system, according to embodiments.
Figure 3 is a flow diagram of a method performed by one of the nodes to protect the computer system from uploading images to a registry if the images are not trustworthy.
Figure 4 is a flow diagram of a method performed by two of the nodes to handle an API call to deploy an image, according to an embodiment.
Figure 5 is a flow diagram of a method performed by one of the nodes to monitor a container runtime for any new images that are not trustworthy, according to an embodiment.
Figure 6 is a flow diagram of a method performed by one of the nodes to remove containers that were deployed using an image that is not trustworthy, according to an embodiment.
Figure 7 is a flow diagram of a method performed by one of the nodes and a cloud computing platform to evaluate an image to determine whether the image is trustworthy, according to an embodiment.
Figure 8 is a flow diagram of a method performed by one of the nodes and the cloud computing platform to evaluate files of an image to determine whether all of the files are trustworthy, according to an embodiment.

### Detailed Description

Techniques are described for protecting an organization's computer system from executing malicious images. The techniques address different vectors of attack at which malicious images may be introduced to the computer system. Firstly, for an image registry controlled by the organization, the computer system builds images before publishing them at the image registry. Secondly, requests are made through application programming interface (API) calls for the computer system to deploy images as containers. Thirdly, even without such API calls, images are downloaded to container runtimes of the computer system for deployment.

In each of the above cases, the techniques involve evaluating whether images are trustworthy. An image being trustworthy means that the image likely has no harmful files such as files including malware (is likely not a malicious image). An image not being trustworthy means that the image is likely to (or is even known to) have such harmful files (is likely to be or known to be a malicious image). For images built by the computer system, trustworthy images are published, while images that are not trustworthy are blocked from being published. In response to API calls to deploy images, trustworthy images are allowed to be deployed, while deployments are blocked for images that are not trustworthy. For images that are otherwise downloaded to the container runtime, images that are trustworthy are allowed to be deployed as containers, while images that are not trustworthy are deleted, and any containers deployed using the images are stopped.

To evaluate whether an image is trustworthy, an image evaluation service of a cloud computing platform maintains a database. The database identifies images that are known to be trustworthy and images that are known not to be trustworthy. The database also identifies files (e.g., executable binary files) that are known to be trustworthy and files that are known not to be trustworthy. An image in the computer system may have a corresponding entry in the database, i.e., it is already known whether the image is trustworthy or not trustworthy. Furthermore, even if there is no entry for the image, some files in the image may have corresponding entries in the database, i.e., it is already known whether those files are trustworthy or not trustworthy. For files that do not have corresponding entries in the database, various methods are employed for examining the file such as machine-learning (ML) malware-detection algorithms. If all the files in an image are trustworthy, that image is considered trustworthy. Otherwise, if a single file is not trustworthy, the image is considered not to be trustworthy.

By evaluating images during the build process, the techniques protect against malicious images from being uploaded to the repository from the computer system. However, the organization may not have the infrastructure or may simply choose not to trigger such evaluations of images uploaded to the repository. Furthermore, the organization may allow for downloading images from third-party registries. By evaluating images requested to be deployed as containers and images already downloaded to the container runtimes, the techniques further protect the computer system from execution of malicious images. These and further aspects of the invention are discussed below with respect to the drawings.

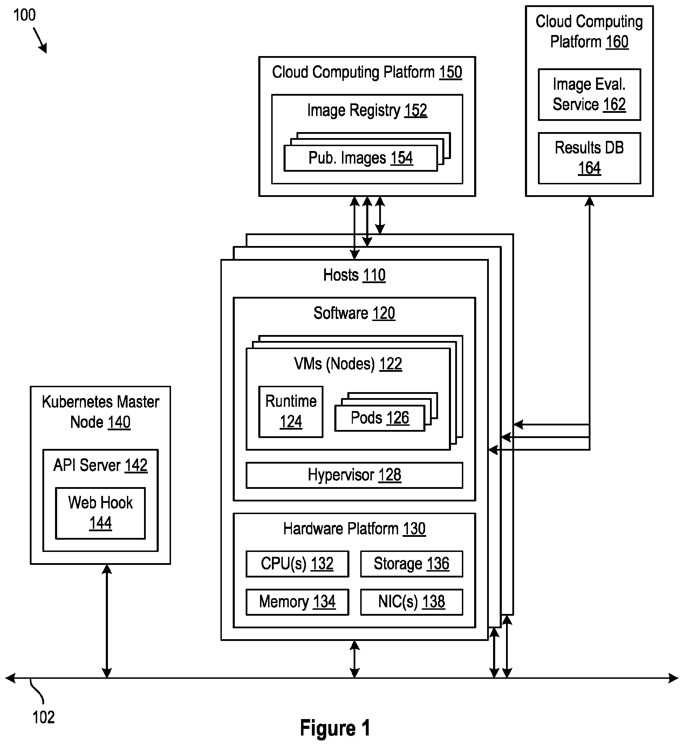

Figure 1 is a block diagram of a computer system 100 in which embodiments may be implemented. Computer system 100 includes cloud computing platforms 150 and 160 and host computers 110 (referred to herein simply as "hosts"). Hosts 110 are controlled and administrated by the organization. Cloud computing platforms 150 and 160 are each operated by a cloud computing service provider to expose "public" cloud services to various account holders. However, other implementations are also contemplated. For example, either of cloud computing platforms 150 and 160 may be operated by the organization that controls hosts 110 as a "private" cloud platform. Cloud computing platforms 150 and 160 may even be operated by the organization in a common cloud platform. Furthermore, components of either of cloud computing platforms 150 and 160 may instead execute "on-premise," i.e., in a local computer system of the organization instead of in the cloud.

Figure 1 also illustrates a Kubernetes^{®} master node 140 of a Kubernetes^{®} container orchestration system, which automates the deployment of containers. However, it should be noted that the teachings herein apply to other container orchestration systems. Additionally, each of hosts 110 is illustrated as including virtual machines (VMs) that are nodes of the orchestration system. However, it should be noted that the teachings herein apply to other structures for deploying containers. For example, hosts 110 may be nodes of the orchestration system themselves, and hosts 110 may include pods without the use of VMs.

Each of hosts 110 includes software 120 and a hardware platform 130. Hardware platform 130 includes conventional components of a computing device, such as one or more central processing units (CPUs) 132, memory 134 such as random-access memory (RAM), local storage 136 such as one or more magnetic drives or solid-state drives (SSDs), and one or more network interface cards (NICs) 138. CPUs 132 are configured to execute instructions such as executable instructions that perform one or more operations described herein, which may be stored in memory 134. NICs 138 enable hosts 110 to communicate with each other and with other devices over a network 102 such as a local area network (LAN).

Hardware platform 130 supports software 120. Software 120 includes a hypervisor 128, which is a virtualization software layer. Hypervisor 128 supports a VM execution space within which VMs 122 are concurrently instantiated and executed. One example of hypervisor 128 is a VMware ESX^{®} hypervisor, available from VMware, Inc.

Each of VMs 122 includes a guest operating system (OS) (not shown) supporting a container runtime 124. Runtime 124 includes images (not shown in Figure 1), which are static archives that have been downloaded from an image registry 152 of cloud computing platform 150. Runtime 124 deploys containers (not shown in Figure 1) in pods 126 using such images. One example of runtime 124 is Containerd.^{®}

Kubernetes^{®} master node 140 is a host or a virtual server of a host that provides a control plane for the container orchestration platform. Kubernetes^{®} master node 140 includes an API server 142. API server 142 is a software component that services API calls such as requests to deploy images as containers on hosts 110. According to embodiments, API server 142 includes a web hook 144, which is code that is triggered when API server 142 receives a request to deploy an image. Web hook 144 calls an image evaluation agent (not shown in Figure 1) of one of VMs 122 to trigger evaluation of the image, as discussed further below.

Cloud computing platform 150 includes image registry 152, which is a database that stores published images 154 for pulling (i.e., downloading). Image registry 152 is a publicly available online database or a private online database that is controlled by the organization using hosts 110. Hosts 110 communicate with cloud computing platform 150, e.g., over the Internet. However, in alternative embodiments, image registry 152 is an on-premise database in a local computer system along with hosts 110. Published images 154 may include images that were built by hosts 110 and uploaded thereby. Alternatively or additionally, published images 154 may include images that were built and published by third parties. Although only one image registry is illustrated in Figure 1 for simplicity, there may be multiple registries that hosts 110 download images from, including a publicly available database and a separate private database.

Cloud computing platform 160 includes an image evaluation service 162 and a results database 164. Hosts 110 communicate with cloud platform 160, e.g., over the Internet. Image evaluation service 162 is a software process that evaluates images. Image evaluation service 162 maintains results database 164, which stores information indicating whether various images are trustworthy and whether various other files are trustworthy.

When evaluating a particular image, image evaluation service 162 checks results database 164 to quickly identify if it is already known whether the image is trustworthy and, if not already known, if it is already known whether some of the files therein are trustworthy. For each such image or constituent file, results database 164 includes an identifier (ID) of the image or constituent file and a result, i.e., "trustworthy" or "not trustworthy." For example, a file ID may be a hash of the file computed, e.g., by inputting the file into a secure hash algorithm 2 (SHA-2) function. An image ID may be a hash computed, e.g., by inputting individual elements of the image into a SHA-2 function, storing the resulting hashes in a configuration file, and then inputting the entire configuration file into a SHA-2 function.

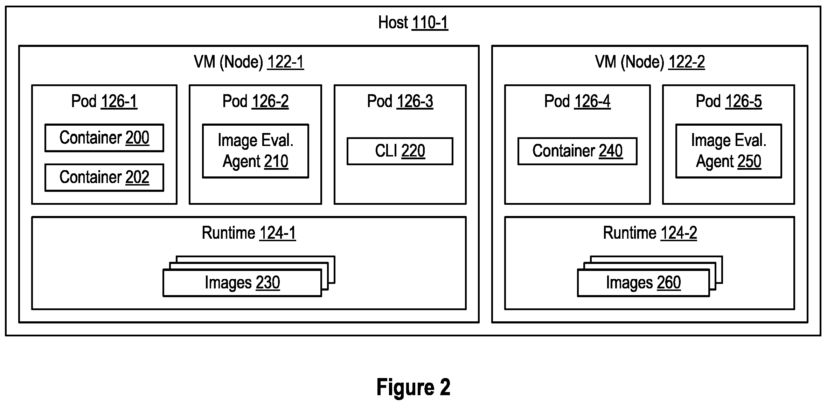

Figure 2 is a block diagram of a host 110-1 and nodes of computer system 100, according to embodiments. Host 110-1 includes two nodes: a VM 122-1 and a VM 122-2. VM 122-1 includes three pods executing on a runtime 124-1: a pod 126-1, a pod 126-2, and a pod 126-3. VM 122-2 includes two pods executing on a runtime 124-2: a pod 126-4 and a pod 126-5. Only two nodes are illustrated for simplicity, but in practice, each of hosts 110 includes many more nodes. Similarly, individual nodes may include many more pods than illustrated here.

Pod 126-1 includes two containers for executing one or more applications of the of the organization: a container 200 and a container 202. Pod 126-2 includes an image evaluation agent 210, which is a container that is configured to monitor VM 122-1 to protect against running malicious images. Image evaluation agent 210 triggers evaluation of images built at VM 122-1, images requested for deployment, and images otherwise downloaded to runtime 124-1. Each node of computer system 100 includes such an image evaluation agent. Pod 126-3 includes a command line interface (CLI) 220, which is a container that enables interaction with components of computer system 100 via command lines. Runtime 124-1 includes images 230, which have been downloaded to VM 122-1 for deployment.

Pod 126-4 includes one container for executing an application of the organization: a container 240. Pod 126-5 includes an image evaluation agent 250, which is a container that is configured to monitor VM 122-2 to protect against running malicious images. Similar to image evaluation agent 210, image evaluation agent 250 triggers evaluation of images requested for deployment and images otherwise downloaded to runtime 124-2. Runtime 124-2 includes images 260, which have been downloaded to VM 122-2 for deployment.

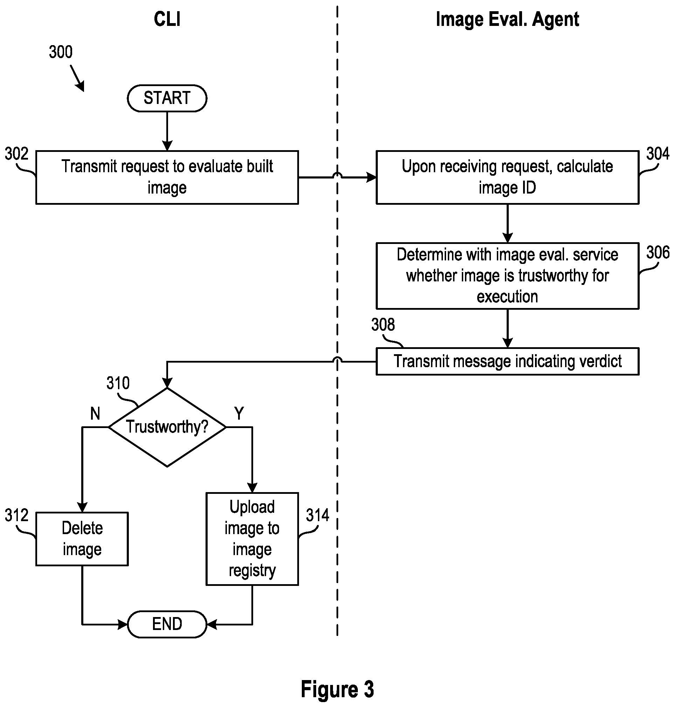

Figure 3 is a flow diagram of a method 300 performed by one of VMs 122 to protect hosts 110 from uploading images to image registry 152 if the images are not trustworthy. Method 300 will be discussed with respect to VM 122-1 of Figure 2. Method 300 is performed after VM 122-1 builds an image from various software packages. At step 302, CLI 220 transmits a request to image evaluation agent 210 to evaluate the image that was built. At step 304, upon receiving the request, image evaluation agent 210 calculates an ID for the image, e.g., in the manner discussed above.

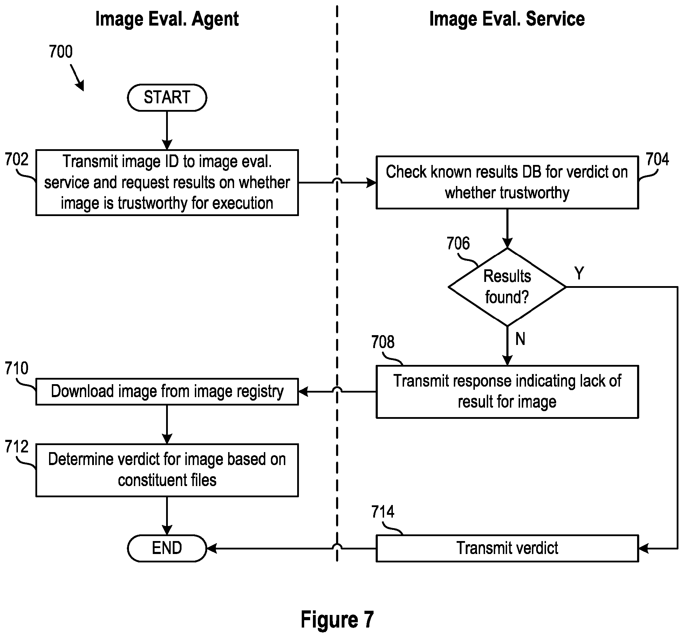

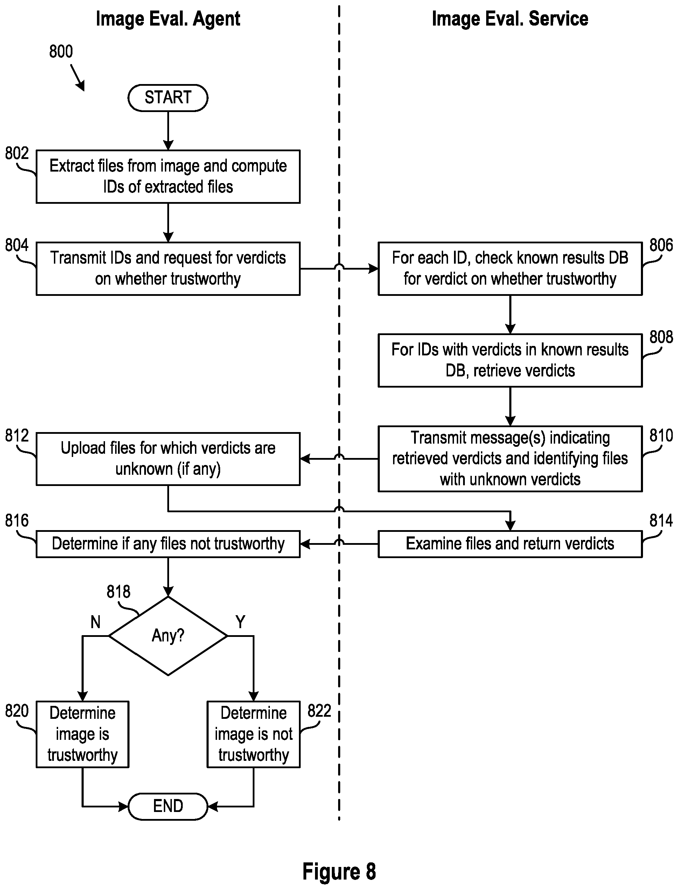

At step 306, image evaluation agent 210 determines with image evaluation service 162 whether the image is trustworthy for execution in hosts 110, as explained below in conjunction with Figures 7 and 8. At step 308, image evaluation agent 210 transmits a message to CLI 220 indicating the verdict, i.e., an indication of whether the image is trustworthy or not trustworthy for uploading to image registry 152. At step 310, if the image is not trustworthy, method 300 moves to step 312, and CLI 220 deletes the image. After step 312, method 300 ends. Returning to step 310, if the image is trustworthy, method 300 moves to step 314, and CLI 220 uploads the image to image registry 152. The image is thereby published for being downloaded to any of hosts 110 for execution. After step 314, method 300 ends.

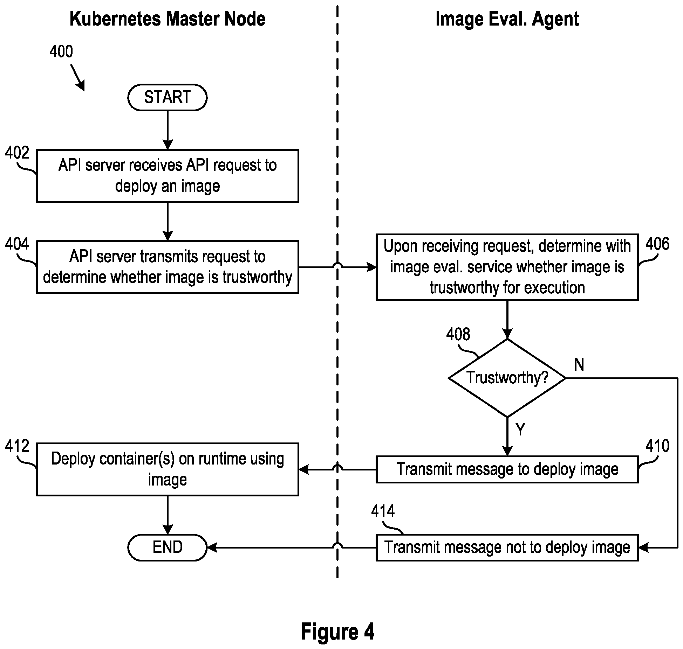

Figure 4 is a flow diagram of a method 400 performed by Kubernetes^{®} master node 140 and one of VMs 122 to handle an API call to deploy an image, according to an embodiment. Method 400 will be discussed with respect to VM 122-1. At step 402, API server 142 receives an API request to deploy an image, the image being identified in the API request by its image ID. At step 404, the API request triggers web hook 144, and API server 142 transmits a request to image evaluation agent 210 to determine whether the image is trustworthy. At step 406, upon receiving the request, image evaluation agent 210 determines with image evaluation service 162 whether the image is trustworthy for execution in hosts 110, as explained below in conjunction with Figures 7 and 8.

At step 408, if the image is trustworthy, method 400 moves to step 410, and image evaluation agent 210 transmits a message to Kubernetes^{®} master node 140 to deploy the image. At step 412, Kubernetes^{®} master node 140 deploys one or more containers on runtime 124-1 using the image. Such deployment involves downloading the image from image registry 152 to runtime 124-1 and runtime 124-1 starting the container(s) using the image. After step 412, method 400 ends. Returning to step 408, if the image is not trustworthy, method 400 moves to step 414, and image evaluation agent 210 transmits a message to Kubernetes^{®} master node 140 not to deploy the image. After step 414, Kubernetes^{®} master node 140 returns an error message indicating that the image is not trustworthy, and method 400 ends.

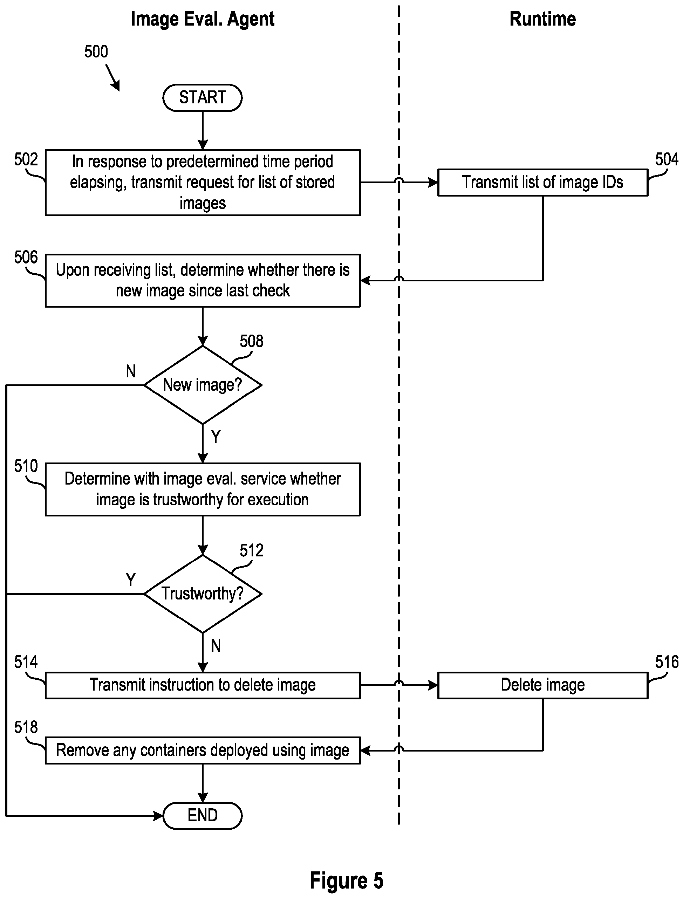

Figure 5 is a flow diagram of a method 500 performed by one of VMs 122 to monitor runtime 124 therein for any new images that are not trustworthy, according to an embodiment. For example, an attacker with privileges to access runtime 124 may download images without making API calls to API server 142. Method 500 will be discussed with respect to VM 122-1.

Method 500 is performed periodically using a timer. Whenever a predetermined time period elapses, image evaluation agent 210 begins method 500 to check for any new images that have been downloaded since the last check. For example, the predetermined time period may be selected to be sufficiently short, such as 100 milliseconds, to ensure that upon determining that an image that is not trustworthy is downloaded to runtime 124-1, no containers have yet been deployed using the image. A longer time period such as 1 second may alternatively be used to avoid creating too much traffic at runtime 124-1.

At step 502, in response to the predetermined time period elapsing, image evaluation agent 210 transmits a request to runtime 124-1 for a list of all the images stored by runtime 124-1. At step 504, runtime 124-1 retrieves a list of its stored images and transmits the list to image evaluation agent 210. Each image is specified in the list by its image ID as discussed above. At step 506, upon receiving the list, image evaluation agent 210 determines whether there is a new image in the list since the previous check.

At step 508, if there is no new image since the previous check, method 500 ends. Otherwise, if there is a new image, method 500 moves to step 510. At step 510, image evaluation agent 210 determines with image evaluation service 162 whether the image is trustworthy for execution in hosts 110. Such evaluation is explained below in conjunction with Figures 7 and 8. At step 512, if the image is trustworthy, method 500 ends. Otherwise, if the image is not trustworthy, method 500 moves to step 514.

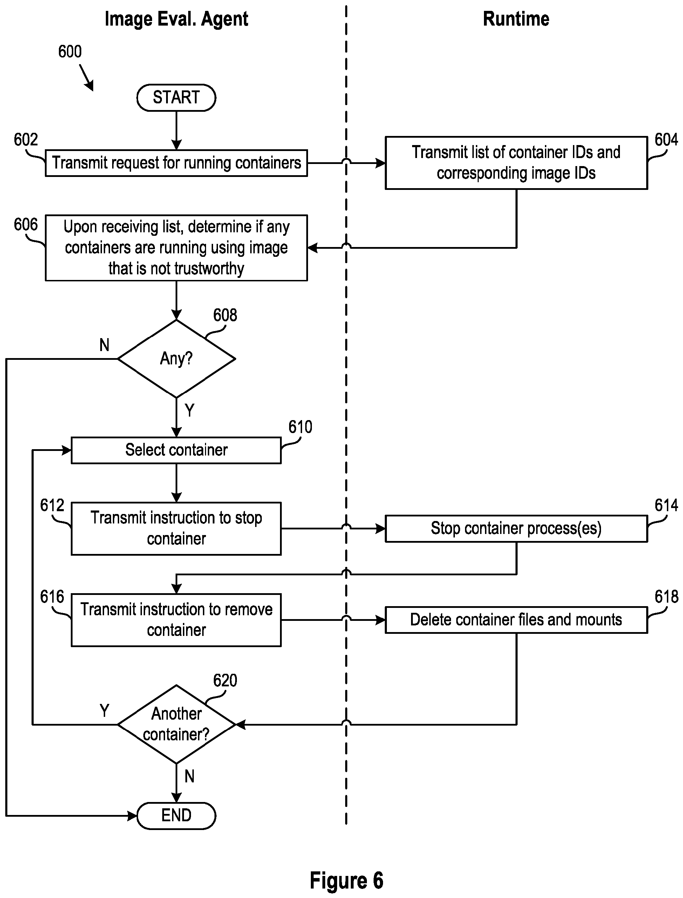

At step 514, image evaluation agent 210 transmits an instruction to runtime 124-1 to delete the image. At step 516, runtime 124-1 deletes the image. This prevents runtime 124-1 from deploying the image. At step 518, image evaluation agent 210 removes any containers that were already deployed by runtime 124-1 using the image. Such removal is explained below in conjunction with Figure 6. After step 518, method 500 ends.

Figure 6 is a flow diagram of a method 600 performed by one of VMs 122 to remove containers that were deployed using an image that is not trustworthy, according to an embodiment. Method 600 will be discussed with respect to VM 122-1. At step 602, image evaluation agent 210 transmits a request to runtime 124-1 for all the containers deployed thereby. At step 604, runtime 124-1 transmits IDs of all such containers to image evaluation agent 210 along with IDs of corresponding images 230. At step 606, upon receiving the list, image evaluation agent 210 determines if any of the containers deployed by runtime 124-1 are running using the image that is not trustworthy. Specifically, image evaluation agent 210 checks if there are any entries in the list matching an ID of the image that is not trustworthy.

At step 608, if there are no containers running using the image that is not trustworthy, method 600 ends. Otherwise, if there is at least one container running using the image, method 600 moves to step 610. At step 610, image evaluation agent 210 selects a container from the list that is running using the image that is not trustworthy. At step 612, image evaluation agent 210 transmits an instruction to runtime 124-1 to stop the selected container, the instruction specifying the ID of the container as specified in the list. At step 614, runtime 124-1 stops any processes for the specified container.

At step 616, image evaluation agent 210 transmits an instruction to runtime 124-1 to remove the container, the instruction specifying the ID container. At step 618, runtime 124-1 deletes any files associated with the container and any mounts of the container on the OS of VM 122-1. At step 620, if there is another container deployed by runtime 124-1 using the image that is not trustworthy, method 600 returns to step 610, and image evaluation agent 210 selects another container for stopping and removing. Otherwise, if there are no more of such containers, method 600 ends.

Figure 7 is a flow diagram of a method 700 performed by one of VMs 122 and cloud computing platform 160 to evaluate an image to determine whether the image is trustworthy, according to an embodiment. Method 700 will be discussed with respect to VM 122-1. At step 702, image evaluation agent 210 transmits the ID of the image to image evaluation service 162 along with a request for results on whether the associated image is trustworthy for execution in hosts 110.

At step 704, image evaluation service 162 checks results database 164 for a verdict on whether the image is trustworthy. In particular, image evaluation service 162 looks for an entry with the same image ID received from image evaluation agent 210. At step 706, if image evaluation service 162 did not find results for the hash, method 700 moves to step 708. At step 708, image evaluation service 162 transmits a response to image evaluation agent 210 indicating the lack of results for the image.

At step 710, image evaluation agent 210 downloads the image from image registry 152. At step 712, image evaluation agent 210 determines a verdict for the image based on its constituent files, as explained below in conjunction with Figure 8. After step 712, method 700 ends. Returning to step 706, if image evaluation service 162 found results for the image in results database 164, method 700 moves to step 714. At step 714, image evaluation service 162 transmits the verdict from results database 164 to image evaluation agent 210, i.e., "trustworthy" or "not trustworthy." After step 714, method 700 ends.

It should be noted that method 700 merely involves image evaluation agent 210 transmitting the image ID to image evaluation service 162. If image evaluation service 162 already knows whether the image is trustworthy, image evaluation agent 210 avoids extracting files from the image to analyze individually. As a result, in cases in which the result of the image is already known, method 700 saves computational resources and arrives at a verdict relatively quickly. For example, if an image that is not trustworthy has already been downloaded by runtime 124-1, this may prevent runtime 124-1 from deploying a container using the image and causing harm.

Figure 8 is a flow diagram of a method 800 performed by one of VMs 122 and cloud computing platform 160 to evaluate files of an image to determine whether all of the files are trustworthy, according to an embodiment. Method 800 will be discussed with respect to VM 122-1. At step 802, image evaluation agent 210 extracts files from the image to analyze such as all the files that are executable binary files, which may include malware. Image evaluation agent 210 then computes IDs of each of the extracted files as discussed above. At step 804, image evaluation agent 210 transmits the file IDs to image evaluation service 162 along with a request for verdicts on whether the associated files are trustworthy.

At step 806, for each file ID, image evaluation service 162 checks results database 164 for a verdict on whether the associated file is trustworthy. In particular, image evaluation service 162 looks for an entry with the same file ID. At step 808, for file IDs with verdicts in results database 164, image evaluation service 162 retrieves the verdicts. At step 810, image evaluation service 162 transmits one or more messages to image evaluation agent 210 indicating all the retrieved verdicts, i.e., "trustworthy" or "not trustworthy." The message(s) also identify files with unknown verdicts, i.e., files for which there are no verdicts in results database 164.

At step 812, for any files with unknown verdicts, image evaluation agent 210 uploads the files in their entireties to image evaluation service 162. At step 814, image evaluation service 162 examines the files to determine whether the files are trustworthy. For example, image evaluation service 162 may apply an ML algorithm to make such determinations. Image evaluation service 162 then transmits the verdicts to image evaluation agent 210, i.e., "trustworthy" or "not trustworthy." If there were no files with unknown verdicts, steps 812 and 814 are skipped.

At step 816, image evaluation agent 210 determines if any of the files are not trustworthy, i.e., checks if any of the received verdicts are "not trustworthy." At step 818, if all of the files are trustworthy, method 800 moves to step 820. At step 820, image evaluation agent 210 determines that the entire image is trustworthy, and method 800 ends. Returning to step 818, if any of the files are not trustworthy, method 800 moves to step 822. At step 822, image evaluation agent 210 determines that the image is not trustworthy, and method 800 ends.

Although not illustrated in Figure 8, for any files examined at step 814, image evaluation service 162 stores the verdict for the file in results database 164 for future use. In particular, image evaluation service 162 stores the file ID along with the verdict, i.e., "trustworthy" or "not trustworthy." Furthermore, for the image, image evaluation service 162 stores the verdict determined at step 820 or 822 in results database 164 for future use. In particular, image evaluation service 162 stores the image ID along with the verdict.

It should be noted that method 800 first involves merely transmitting file IDs to image evaluation service 162. If image evaluation service 162 already knows whether a file is trustworthy, image evaluation agent 210 avoids uploading the entire file to image evaluation service 162. As a result, in cases in which the result of the file is already known, method 800 saves computational resources and arrives at a verdict relatively quickly. For example, if an image that is not trustworthy has already been downloaded by runtime 124-1, this may prevent runtime 124-1 from deploying a container using the image and causing harm.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

One or more embodiments of the invention also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations. The embodiments described herein may also be practiced with computer system configurations including hand-held devices, microprocessor systems, microprocessor-based or programmable consumer electronics, minicomputers, mainframe computers, etc.

One or more embodiments of the present invention may be implemented as one or more computer programs or as one or more computer program modules embodied in computer-readable media. The term computer-readable medium refers to any data storage device that can store data that can thereafter be input into a computer system. Computer-readable media may be based on any existing or subsequently developed technology that embodies computer programs in a manner that enables a computer to read the programs. Examples of computer-readable media are magnetic drives, SSDs, network-attached storage (NAS) systems, read-only memory (ROM), RAM, compact disks (CDs), digital versatile disks (DVDs), magnetic tapes, and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined component. Similarly, structures and functionalities presented as a single component may be implemented as separate components. These and other variations, additions, and improvements may fall within the scope of the appended claims.

## Claims

1. A method of protecting a computer system (100) from execution of container images that are not trustworthy, the method comprising:
receiving a message from an application programming interface, API, server (142) of a container orchestration system of the computer system (100), wherein the message indicates that a first container image has been requested for deployment;
in response to receiving the message from the API server (142) that the first container image has been requested, transmitting a request to an image evaluation service (162) to evaluate whether the first container image is trustworthy for execution; and
in response to receiving an indication from the image evaluation service (162) that the first container image is not trustworthy, transmitting to the API server (142), an instruction not to deploy containers using the first container image.

2. The method of claim 1, wherein the request to the image evaluation service (162) identifies the first container image by an identifier, ID, of the first container image, the ID being based on hashes of contents of the first container image.

3. The method of claim 1 or 2, further comprising:
downloading the first container image from a registry (152) of published container images;
extracting a plurality of executable files from the downloaded first container image; and
computing a hash of each executable file of the plurality of executable files, wherein the request to the image evaluation service (162) includes the hashes of the executable files.

4. The method of any of claims 1 to 3, further comprising:
downloading the first container image from a registry (152) of published container images; and
extracting a plurality of executable files from the downloaded first container image, wherein the request to the image evaluation service (162) includes at least one of the executable files.

5. The method of any of claims 1 to 4, further comprising:
receiving a request from a command-line interface, CLI, (220) to scan a second container image;
in response to receiving the request from the CLI (220), transmitting a request to the image evaluation service (162) to evaluate whether the second container image is trustworthy for execution; and
in response to receiving an indication from the image evaluation service (162) that the second container image is trustworthy, transmitting a message to the CLI (220) indicating that the image is trustworthy for uploading to a registry (152) of published container images.

6. The method of any of claims 1 to 5, further comprising:
receiving a message from the API server (142) indicating that a third container image has been requested for deployment;
in response to receiving the message from the API server (142) that the third container image has been requested, transmitting a request to the image evaluation service (162) to evaluate whether the third container image is trustworthy for execution; and
in response to receiving an indication from the image evaluation service (162) that the third container image is trustworthy, transmitting to the API server (142), an instruction to deploy one or more containers using the third container image.

7. The method of claim 6, wherein the instruction to deploy the one or more containers using the third container image causes the container orchestration system to deploy the one or more containers on a container runtime of the computer system (100).

8. A non-transitory computer-readable medium comprising instructions that are executable in a host computer (110), wherein the instructions when executed cause the host computer (110) to carry out a method of protecting a computer system (100) from execution of container images that are not trustworthy, the method comprising:
receiving a message from an application programming interface, API, (142) server of a container orchestration system of the computer system (100), wherein the message indicates that a first container image has been requested for deployment;
in response to receiving the message from the API server (142) that the first container image has been requested, transmitting a request to an image evaluation service (162) to evaluate whether the first container image is trustworthy for execution; and
in response to receiving an indication from the image evaluation service (162) that the first container image is not trustworthy, transmitting to the API server (142), an instruction not to deploy containers using the first container image.

9. The non-transitory computer-readable medium of claim 8, wherein the request to the image evaluation service (162) identifies the first container image by an identifier, ID, of the first container image, the ID being based on hashes of contents of the first container image.

10. The non-transitory computer-readable medium of claim 8 or 9, comprising at least one of the following features:
wherein the method further comprises:
downloading the first container image from a registry (152) of published container images;
extracting a plurality of executable files from the downloaded first container image; and
computing a hash of each executable file of the plurality of executable files, wherein the request to the image evaluation service (162) includes the hashes of the executable files;
wherein the method further comprises:
downloading the first container image from a registry (152) of published container images; and
extracting a plurality of executable files from the downloaded first container image, wherein the request to the image evaluation service (162) includes at least one of the executable files.

11. The non-transitory computer-readable medium of any of claims 8 to 10, wherein the method further comprises:
receiving a request from a command-line interface, CLI, (220) to scan a second container image;
in response to receiving the request from the CLI (220), transmitting a request to the image evaluation service (162) to evaluate whether the second container image is trustworthy for execution; and
in response to receiving an indication from the image evaluation service (162) that the second container image is trustworthy, transmitting a message to the CLI (220) indicating that the image is trustworthy for uploading to a registry (152) of published container images.

12. The non-transitory computer-readable medium of any of claims 8 to 11, wherein the method further comprises:
receiving a message from the API server (142) indicating that a third container image has been requested for deployment;
in response to receiving the message from the API server (142) that the third container image has been requested, transmitting a request to the image evaluation service (162) to evaluate whether the third container image is trustworthy for execution; and
in response to receiving an indication from the image evaluation service (162) that the third container image is trustworthy, transmitting to the API server (142), an instruction to deploy one or more containers using the third container image.

13. The non-transitory computer-readable medium of claim 12, wherein the instruction to deploy the one or more containers using the third container image causes the container orchestration system to deploy the one or more containers on a container runtime of the computer system (100).

14. A host computer (110) configured to execute on a processor of a hardware platform to protect a computer system (100) from execution of container images that are not trustworthy, wherein an image evaluation agent (210) of the host computer (110) is configured to execute on the processor to perform the following steps:
receive a message from an application programming interface (API) server of a container orchestration system of the computer system (100), wherein the message indicates that a first container image has been requested for deployment;
in response to receiving the message from the API server (142) that the first container image has been requested, transmit a request to an image evaluation service (162) to evaluate whether the first container image is trustworthy for execution; and
in response to receiving an indication from the image evaluation service (162) that the first container image is not trustworthy, transmit to the API server (142), an instruction not to deploy containers using the first container image.

15. The host computer (110) of claim 14, comprising at least one of the following features:
wherein the request to the image evaluation service (162) identifies the first container image by an identifier (ID) of the first container image, the ID being based on hashes of contents of the first container image;
wherein the image evaluation agent (210) is further configured to:
download the first container image from a registry (152) of published container images;
extract a plurality of executable files from the downloaded first container image; and
compute a hash of each executable file of the plurality of executable files, wherein the request to the image evaluation service (162) includes the hashes of the executable files;
wherein the image evaluation agent (210) is further configured to:
download the first container image from a registry (152) of published container images; and
extract a plurality of executable files from the downloaded first container image, wherein the request to the image evaluation service (162) includes at least one of the executable files;
wherein the image evaluation agent (210) is further configured to:
receive a request from a command-line interface, CLI, (220) to scan a second container image;
in response to receiving the request from the CLI (220), transmit a request to the image evaluation service (162) to evaluate whether the second container image is trustworthy for execution; and
in response to receiving an indication from the image evaluation service (162) that the second container image is trustworthy, transmit a message to the CLI (220) indicating that the image is trustworthy for uploading to a registry (152) of published container images;
wherein the image evaluation agent (210) is further configured to:
receive a message from the API server (142) indicating that a third container image has been requested for deployment;
in response to receiving the message from the API server (142) that the third container image has been requested, transmit a request to the image evaluation service (162) to evaluate whether the third container image is trustworthy for execution; and
in response to receiving an indication from the image evaluation service (162) that the third container image is trustworthy, transmit to the API server (142), an instruction to deploy one or more containers using the third container image, wherein transmitting the instruction to deploy the one or more containers using the third container image causes the container orchestration system to deploy the one or more containers on a container runtime of the computer system (100).
